# EUROPEAN PATENT APPLICATION

(11) **EP 2 520 613 A2**
(43) Date of publication of application: **07.11.2012**
(21) Application number: 10841120.8
(22) Date of filing: 21.10.2010
(51) Int. Cl.: C08K 5/53, C08L 69/00, C08L 51/04, C09K 21/14, C08G 79/02

(54) **THERMOPLASTIC RESIN COMPOSITION INCLUDING A POLYMERIZED PHOSPHORUS COMPOUND, PLASTIC MOLDED PART MADE FROM THE COMPOSITION, AND METHOD FOR MANUFACTURING A POLYMERIZED PHOSPHORUS COMPOUND**

(30) Priority: 25.08.2010 KR 20100082354; 30.12.2009 KR 20090134172
(71) Applicant: Cheil Industries Inc., Gumi-si Gyeongbuk 730-710 (KR)
(72) Inventor: KO, Chang Hong, Uiwang-si Gyeonggi-do 437-711 (KR); LEE, Seon Ae, Uiwang-si Gyeonggi-do 437-711 (KR); BAE, Im Hyuck, Uiwang-si Gyeonggi-do 437-711 (KR); JOO, Beom Jun, Uiwang-si Gyeonggi-do 437-711 (KR); LEE, Won Gi, Uiwang-si Gyeonggi-do 437-711 (KR)
(74) Representative: Bublak, Wolfgang
(86) International application number: PCT/KR2010/007245
(87) International publication number: WO 2011/081287

(57) **Abstract**

The present invention provides a thermoplastic resin composition that can have excellent flame retardancy comprising 100 parts by weight of a base resin including 30 to 100 % by weight of a polycarbonate-based resin (A); and 0.1 to 40 parts by weight of a phosphorus-containing compound in the form of polymer (C). The thermoplastic resin composition can have excellent flame retardancy, can exhibit a balance of properties such as impact strength, heat resistance, flowability, and the like, and can be environment-friendly.

## Description

### Cross-Reference to Related Applications

This application is a continuation-in-part of International Application No. PCT/KR2010/007245, filed October 21, 2010, pending, which designates the U.S., published as WO 2011/081287, and is incorporated herein by reference in its entirety, and claims priority therefrom under 35 USC Section 120. This application also claims priority under 35 USC Section 119 from Korean Patent Application No. 10-2009-0134172, filed December 30, 2009, and Korean Patent Application No. 10-2010-0082354, filed August 25, 2010, in the Korean Intellectual Property Office, the disclosure of each of which is incorporated herein by reference in its entirety.

### Field of the Invention

The present invention relates to a thermoplastic resin composition comprising a phosphorus-containing compound in the form of polymer, a plastic molded article molded from the composition, and a method for preparing a phosphorus-containing compound in the form of polymer.

### Background

Thermoplastic resins have been used in parts of electronic goods due to their excellent processability and mechanical properties. The range of applications thereof is explosively increasing with the recent development of various functional additives. However, many thermoplastic resins are combustible and can have minimal resistance against fire. Therefore, the plastic can be easily burned by external ignition sources and can also play a role in spreading fire. In view of the same, many countries such as the U.S., Japan and the EU require polymer resins to meet certain flameproof standards to ensure the safety of electronic goods against fire.

One commonly used method for imparting flame retardancy to a polymer is to add flame retardant to the polymer and form a blend. These additive-type flame retardants can be classified as halogen-containing, phosphorus-containing, nitrogen-containing, silicone-containing and inorganic-containing flame retardants, depending on the constituent elements thereof. Among these, halogen-containing and inorganic-containing compounds have been frequently used as flame retardants.

When a combination of a halogen-containing compound and an antimony-containing compound is used, flame retardancy can be improved at low cost. Thus this combination has been used in various resins (such as acrylonitrile-butadiene-styrene or ABS resins, polystyrene or PS resins, polybutylene terephthalate or PBT resins, polyethylene terephthalate or PET resins, epoxy resins and the like) to produce housing materials for electronic products. However, there can be environmental issues associated with halogen-containing compounds and the use thereof has been restricted by the Restriction of Hazardous Substances (RoHS) effectuated in July, 2006. As a result, the use of some halogen-containing flame retardants known as "deca" has stopped, and consumption thereof has significantly decreased. Also as a result, recently there is increased interest in methods for imparting flame retardancy without using halogen-containing compounds.

Phosphorus-containing flame retardants have been used as an alternative to halogen-containing compounds to impart flame retardancy to thermoplastic resins. Phosphorus-containing flame retardants can provide excellent flame retardancy properties in the solid phase, particularly in plastics containing a large amount of oxygen. Phosphorus-containing flame retardants can be classified as phosphates, phosphine oxides, phosphites, phosphonates and the like, and can achieve flame retardancy in combination with char-forming agents such as polycarbonate or polyphenylene ether resin.

Typically, single-molecular phosphorus-containing compounds such as triphenyl phosphate or resorcinol bisphenol phosphate is used as the phosphorus-containing compound. When the single-molecular phosphorus-containing flame retardant is used, flame retardancy can be easily obtained. However, because these compounds have a low molecular weight, they can volatilize at high molding temperatures typical of plastic molding, and thereby the appearance of the plastic can deteriorate. Also, when the plastic is used after molding, the single-molecular flame retardant can be extracted, which can cause environmental issues.

Therefore, in order to solve the problems mentioned above, there is increased interest in polyphosphonate that is a phosphorus-containing flame retardant in the form of a polymer. When the polyphosphonate in the form of a polymer is used as a flame retardant additive, excellent flame retardancy and mechanical properties can be retained, compared to existing single-molecular phosphorus-containing flame retardants, and it does not volatilize during plastic molding. Also, because it has high compatibility with many existing polymer resins, compared to single-molecular flame retardants, it can be easily used to provide transparent materials. Further, because polyphosphonate in the form of a polymer can have low extractability after molding, its use can minimize environmental issues.

### Summary

The present invention relates to a thermoplastic resin composition that can have excellent flame retardancy. The thermoplastic resin composition includes a phosphorus-containing compound in the form of a polymer, which can impart excellent flame retardancy even when used in a small amount as a flame retardant. The thermoplastic resin composition can also exhibit an excellent balance of properties such as flame retardancy, heat resistance, flowability, appearance and the like.

The present invention further provides a phosphorus-containing compound in the form of a polymer. The phosphorus-containing compound in the form of a polymer can exhibit a minimized concentration of acid at end groups by adjusting end groups at polymerization.

The present invention also provides a method for making the phosphorus-containing compound in the form of a polymer with specific substitutes. The method can allow the stable and efficient production of the phosphorus-containing compound in the form of a polymer.

The present invention further provides a plastic molded article molded from the thermoplastic resin composition including a phosphorus-containing compound in the form of a polymer. The plastic molded article can be environmentally friendly and can exhibit an excellent balance of properties such as flame retardancy, heat resistance, flowability, appearance and the like.

The thermoplastic resin composition that can have excellent flame retardancy comprises 100 parts by weight of a base resin including 30 to 100 % by weight of a polycarbonate-based resin (A); and 0.1 to 40 parts by weight of a phosphorus-containing compound in the form of polymer (C) represented by the following Chemical Formula 1. 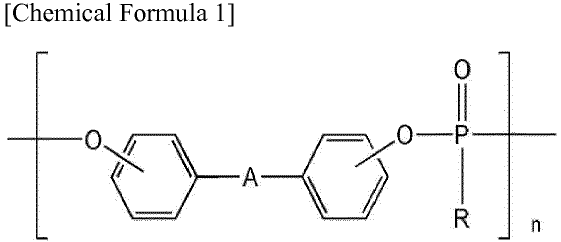 wherein A is single bond, C₁-C₁₀ alkylene, C₁-C₁₀ alkylidene, C₃C₁₂ cycloalkylidene, -S- or -SO₂-, R is C₆-C₂₀ aryl or C₁-C₁₀ alkyl-substituted C₆-C₂₀ aryl, and n is an integer of 4 to 500.

In exemplary embodiments of the present invention, the base resin can comprise 30 to 100 % by weight of a polycarbonate-based resin (A) and 0 to 70 % by weight of a rubber modified aromatic vinyl-based polymer (B).

In exemplary embodiments, the rubber modified aromatic vinyl-based polymer (B) can comprise (B1) 10 to 100 % by weight of a graft copolymer resin and (B2) 0 to 90 % by weight of a copolymer resin.

In exemplary embodiments, in the compound of Chemical Formula 1, R is phenyl.

In exemplary embodiments, the phosphorus-containing compound in the form of a polymer can have a weight average molecular weight (Mw) of 1,000 to 100,000.

In another exemplary embodiment of the present invention, end groups of the phosphorus-containing compound in the form of polymer (C) can be prepared by reacting with 4-cumylphenol.

In exemplary embodiments, the phosphorus-containing compound in the form of a polymer can have end groups derived from 4-cumylphenol in an amount of 0.03 to 0.3 mol per 1 mol of the repeating units of the Chemical Formula 1.

In exemplary embodiments, the phosphorus-containing compound in the form of a polymer can have an acid value of 0.01 to 12.

The present invention also provides a plastic molded article molded from the thermoplastic resin composition. The molded article can have excellent flame retardancy.

The present invention further provides a method for preparing a phosphorus-containing flameproof compound in the form of polymer. The method can include reacting an aryl group-substituted phosphonic acid dichloride with a bisphenol-based compound represented by the following Chemical Formula 2 in the presence of a catalyst such as 4-dimethylaminopyridine to polymerize a polyphosphonate with unadjusted end groups, and reacting the polyphosphonate with unadjusted end groups with 4-cumylphenol to adjust the end groups and obtain a phosphorus-containing flameproof compound in the form of polymer represented by the following Chemical Formula 1. 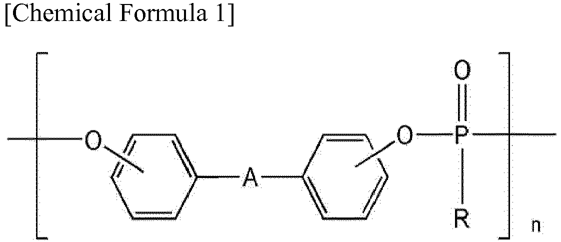 wherein A is single bond, C₁-C₁₀ alkylene, C₁-C₁₀ alkylidene, C₃C₁₂ cycloalkylidene, -S- or -SO₂-, R is C₆-C₂₀ aryl or C₁-C₁₀ alkyl-substituted C₆-C₂₀ aryl, and n is an integer of 4 to 500. 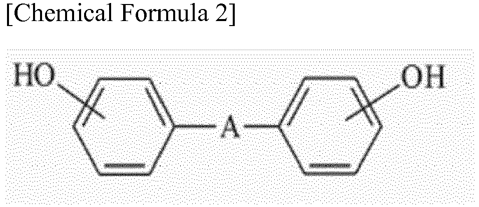 wherein A is single bond, C₁-C₁₀ alkylene, C₁-C₁₀ alkylidene, C₃-C₁₂ cycloalkylidene, -S- or -SO₂-.

In exemplary embodiments, 1 equivalent of the aryl group-substituted phosphonic acid dichloride can be reacted with 1 equivalent of the diphenol compound represented by Chemical Formula 2.

In exemplary embodiments, 1 equivalent of the aryl group-substituted phosphonic acid dichloride can be reacted with 0.03 to 0.3 equivalents of 4-cumylphenol.

### Detailed Description

The present invention now will be described more fully hereinafter in the following detailed description of the invention, in which some, but not all embodiments of the invention are described. Indeed, this invention may be embodied in many different forms and should not be construed as limited to the embodiments set forth herein; rather, these embodiments are provided so that this disclosure will satisfy applicable legal requirements.

The present invention provides a thermoplastic resin composition that can have excellent flame retardancy comprising 100 parts by weight of a base resin including 30 to 100 % by weight of a polycarbonate-based resin (A); and 0.1 to 40 parts by weight of a phosphorus-containing compound in the form of polymer (C) represented by the following Chemical Formula 1. 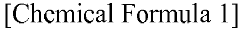 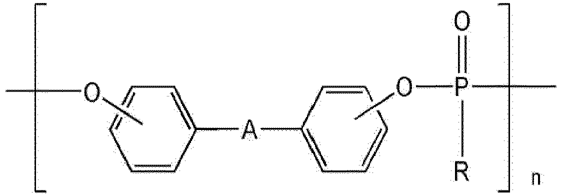 wherein A is single bond, C₁-C₁₀ alkylene, C₁-C₁₀ alkylidene, C₃C₁₂ cycloalkylidene, -S- or -SO₂-, R is C₆-C₂₀ aryl or C₁-C₁₀ alkyl-substituted C₆-C₂₀ aryl, and n is an integer of 4 to 500.

In exemplary embodiments of the present invention, the base resin can comprise 30 to 100 % by weight of the polycarbonate-based resin (A) and 0 to 70 % by weight of a rubber modified aromatic vinyl-based polymer (B).

The phosphorus-containing compound in the form of polymer (C) represented by Chemical Formula 1 is a polyphosphonate compound in the form of a polymer with specific substituent(s), and is used in the thermoplastic resin composition of the present invention as a flame retardant. In other words, the present invention provides an environmentally-friendly flameproof thermoplastic resin composition that can have excellent heat resistance and appearance, as well as flame retardancy, by adding the phosphorus-containing compound in the form of polymer (C) into the polycarbonate resin and optionally the rubber modified aromatic vinyl-based polymer.

The phosphorus-containing compound in the form of polymer (C) can impart excellent flame retardancy even with a small amount, is environmentally-friendly because it does not emit halogenated gas causing environmental pollution at processing or combustion, and does not volatilize like a single-molecular flame retardant does. Moreover, when the phosphorus-containing compound in the form of polymer (C) is used in the thermoplastic resin, the thermoplastic resin composition can exhibit an excellent balance of properties such as flame retardancy, impact strength, heat resistance, flowability and the like.

Hereinafter, each component constituting the thermoplastic resin composition with excellent flame retardancy will be described in more detail.

### Thermoplastic resin composition

### (A) Polycarbonate resin

The polycarbonate resin (A) according to the present invention can be prepared by reacting a bisphenol-based compound represented by the following Chemical Formula 2 with a phosgene or a carbonic acid diester. 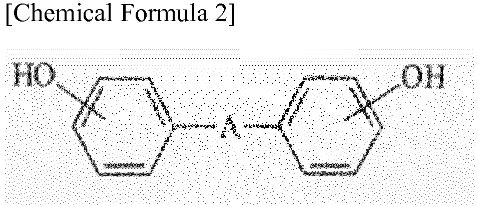 wherein A is single bond, C₁-C₁₀ alkylene, C₁-C₁₀ alkylidene, C₃C₁₂ cycloalkylidene, -S- or -SO₂-.

Examples the diphenol of Chemical Formula 2 comprise without limitation bis(hydroxyaryl)alkanes such as 1,1-bis(2-hydroxyphenyl)methane, 1,1-bis(4-hydroxyphenyl)ethane, 4,4'-dihydroxy diphenyl, 2,2-bis(4-hydroxyphenyl)propane ('bisphenol A'), 2,4-bis-(4-hydroxyphenyl)-2-methylbutane, 2,2-bis(4-hydroxyphenyl)butane, 2,2-bis(4-hydroxyphenyl)octane, 1,1-bis(4-hydroxyphenyl)propane, 1,1-bis(4-hydroxyphenyl)-n-butane, bis(4-hydroxyphenyl)phenylmethane, 2,2-bis(4-hydroxy-1-methylphenyl)propane, 1,1-bis(4-hydroxy-t-butylphenyl)propane and 2,2-bis(4-hydroxy-3-bromophenyl)propane; bis(hydroxyaryl)cycloalkanes such as 1,1-bis(4-hydroxyphenyl)cyclopentane and 1,1-bis(4-hydroxyphenyl)cyclohexane; 2,2-bis-(3-chloro-4-hydroxyphenyl)-propane, 2,2-bis-(3,5-dichloro-4-hydroxyphenyl)-propane and the like, and combinations thereof. Also, examples of the diphenol compound can comprise without limitation hydroquinone and substituted hydroquinones such as 3-methylhydroquinone, 3-ethylhydroquinone, 3-propylhydroquinone, 3-butylhydroquinone, 3-t-butylhydroquinone, 3-phenylhydroquinone, 3-cumylhydroquinone, 2,3,5,6-tetramethylhydroquinone, 2,3,4,5,6-tetra-t-butylhydroquinone, 2,3,5,6-tetrafluorohydroquinone and 2,3,5,6-tetrabromohydroquinone; resorcinol and substituted resorcinols such as 3-methylresorcinol, 3-ethylresorcinol, 3-propylresorcinol, 3-butylresorcinol, 3-t-butylresorcinol, 3-phenylresorcinol, 3-cumylresorcinol, 2,3,4,6-tetrafluororesorcinol and 2,3,4,6-tetrabromoresorcinol; catechol and the like, and combinations thereof. In exemplary embodiments, a bisphenol type diphenol such as 2,2-bis-(4-hydroxyphenyl)-propane, 2,2-bis-(3,5-dichloro-4-hydroxyphenyl)-propane, 1,1-bis-(4-hydroxyphenyl)-cyclohexane and the like can be used, and particularly 2,2-bis-(4-hydroxyphenyl)-propane called bisphenol-A.

The polycarbonate resin can be linear or branched, and a mixture thereof can also be also used. In exemplary embodiments, the branched polycarbonate can be prepared by adding 0.05 to 2 mol% of tri- or higher multifunctional compound, for example a compound with 3 or more phenol groups, based on the total amount of diphenol used in polymerization.

Also, the polycarbonate resin can be used alone or a mixture of two or more of polycarbonate resins with different molecular weights can be used.

In other exemplary embodiments, a polyestercarbonate copolymer resin can be used.

In the present invention the base resin can include polycarbonate resin (A) in an amount of 30 to 100 % by weight, for example about 40 to about 90 % by weight, as another example about 50 to about 80 % by weight, and as yet another example about 60 to about 77 % by weight, based on the total weight of the base resin.. The polycarbonate resin can help impart flame retardancy more easily. The polycarbonate resin can help impart flame retardancy more easily.

When the base resin includes the polycarbonate resin in an amount within the above range, the thermoplastic resin composition can have an excellent balance of properties such as flame retardancy and mechanical properties.

### (B) Rubber modified aromatic vinyl-based polymer

The base resin can include the rubber modified aromatic vinyl-based copolymer resin (B) in an amount of 0 to 70 % by weight, for example 1 to 50 % by weight, and as another example 5 to 40 % by weight, based on the total weight of base resin.

The rubber modified aromatic vinyl-based copolymer (B) according to the present invention can be a polymer wherein a rubbery polymer is dispersed in the form of particles in a matrix of an aromatic vinyl-based polymer (continuous phase).

Examples of the rubber modified aromatic vinyl-based copolymer (B) comprise without limitation acrylonitrile-butadiene-styrene copolymer resin (ABS resin), acrylonitrile-ethylenepropylene rubber-styrene copolymer resin (AES resin), acrylonitrile-acrylic rubber-styrene copolymer resin (AAS resin), high impact polystyrene (HIPS) and the like, and combinations thereof.

In exemplary embodiments, the rubber modified aromatic vinyl-based copolymer (B) can comprise 3 to 30 % by weight of rubbery polymer units and 70 to 97 % by weight of aromatic vinyl units.

In other exemplary embodiments the rubber modified aromatic vinyl-based copolymer can be prepared by polymerizing rubbery polymer, aromatic vinyl-based monomer, and optionally monomer copolymerizable with the aromatic vinyl-based monomer according to the desired end properties. The rubber modified aromatic vinyl-based copolymer resin can be prepared by known polymerization methods such as emulsion polymerization, suspension polymerization, and bulk polymerization, and is usually prepared by mixing and extruding a graft copolymer resin and a copolymer resin. In the case of bulk polymerization, a graft copolymer resin and a copolymer resin are not separately prepared, but the rubber modified aromatic vinyl-based copolymer resin is prepared by a one step reaction process.

In either case an amount of rubber among the final rubber modified aromatic vinyl-based copolymer (B) component can be 1 to 30 % by weight, for example 3 to 20 % by weight, and as another example 5 to 15 % by weight, based on the total weight of the rubber modified aromatic vinyl-based copolymer (B).

The rubber can have a Z-average particle size of 0.1 to 6.0 µm, for example 0.25 to 4 µm.

The rubber modified aromatic vinyl-based copolymer used in the present invention can be prepared by using the graft copolymer resin alone or both the graft copolymer resin and the copolymer resin. In exemplary embodiments, the graft copolymer resin and the copolymer resin can be mixed, taking into account the compatibility of each component.

### (B1) Graft Copolymer Resin

The graft copolymer resin of the present invention can be prepared by graft-copolymerizing a rubbery polymer, an aromatic vinyl-based monomer, a monomer copolymerizable with the aromatic vinyl-based monomer, and optionally a monomer imparting processability and heat resistance.

Examples of the rubbery polymers can include without limitation diene-rubbers such as polybutadiene, poly(styrene-butadiene), poly(acrylonitrile-butadiene) and the like; saturated rubbers in which hydrogen is added to the diene-rubbers; isoprene rubbers, acrylic rubbers such as alkyl acrylate rubbers, polybutyl acrylic acid; terpolymers of ethylene-propylene-diene monomer (EPDM), and the like, and combinations thereof. In exemplary embodiments, a diene-rubber, such as butadiene rubber, can be used.

The graft copolymer resin (B1) can include the rubbery polymer in an amount of 5 to 65 % by weight based on total weight of the graft copolymer resin (B1).

The average size of the rubber particles can be 0.1 to 4 µm taking into account impact strength and appearance.

Examples of the aromatic vinyl-based monomer among the mixture of graft-copolymerizable monomers can include without limitation styrene, α-methylstyrene, β-methylstyrene, p-methylstyrene, p-t-butylstyrene, ethylstyrene, vinylxylene, monochlorostyrene, dichlorostyrene, dibromostyrene, vinyl naphthalene and the like, and combinations thereof. In exemplary embodiments, styrene can be used.

The graft copolymer resin (B1) can include the aromatic vinyl-based monomer in an amount of 34 to 94 % by weight based on total weight of the graft copolymer resin (B1) for graft-copolymerizing.

One or more monomers copolymerizable with the aromatic vinyl-based monomer can be introduced into the graft copolymer resin (B1) of the present invention. Examples of the monomers copolymerizable with the aromatic vinyl monomer include without limitation unsaturated nitrile-based compounds such as acrylonitrile, ethacrylonitrile, methacrylonitrile, and the like, and these can be used singly or as a combination of at least two or more thereof.

The graft copolymer resin (B1) can include the monomer copolymerizable with the aromatic vinyl-based monomer in an amount of 1 to 30 % by weight based on total weight of the graft copolymer resin (B1) for graft-copolymerizing.

Examples of the monomer imparting processability and heat resistance can include without limitation acrylic acid, methacrylic acid, maleic acid anhydride, N-substituted maleimide, and the like, and combinations thereof. The graft copolymer resin (B1) can include the monomer imparting processability and heat resistance in an amount of 0 to 15 % by weight based on total weight of the graft copolymer resin (B 1).

### (B2) Copolymer Resin

The copolymer resin (B2) can be prepared taking into account the ratio of the monomers of the graft copolymer resin (B1) excluding rubber and compatibility, and can be prepared by copolymerizing an aromatic vinyl-based monomer, a monomer copolymerizable with the aromatic vinyl-based monomer, and optionally a monomer imparting processability and heat resistance.

Examples of the aromatic vinyl-based monomer can include without limitation styrene, α-methylstyrene, β-methylstyrene, p-methylstyrene, p-t-butylstyrene, ethylstyrene, monochlorostyrene, dichlorostyrene, dibromostyrene and the like, and combinations thereof. In exemplary embodiments, styrene can be used.

The copolymer resin (B2) can include the aromatic vinyl-based monomer in an amount of 60 to 90 % by weight based on total weight of the copolymer resin (B2) for graft-copolymerizing.

Examples of the monomer copolymerizable with the aromatic vinyl-based monomer can include without limitation unsaturated nitrile-based compounds such as acrylonitrile, ethacrylonitrile, methacrylonitrile and the like, and these can be used singly or as a combination of at least two or more thereof.

The copolymer resin (B2) can include the monomer copolymerizable with the aromatic vinyl-based monomer in an amount of 10 to 40 % by weight based on total weight of the copolymer resin (B2).

Examples of the monomer imparting processability and heat resistance can include without limitation acrylic acid, methacrylic acid, maleic acid anhydride, N-substituted maleimide, and the like, and combinations thereof. The copolymer resin (B2) can include the monomer imparting processability and heat resistance in an amount of 0 to 30 % by weight based on total weight of the copolymer resin (B2).

The rubber modified aromatic vinyl-based copolymer (B) used in the present invention can comprise 10 to 100 % by weight of the graft copolymer resin (B1) and 0 to 90 % by weight of the copolymer resin (B2), based on the total weight of the rubber modified aromatic vinyl-based copolymer (B). In exemplary embodiments, the rubber modified aromatic vinyl-based copolymer resin (B) comprises 55 to 90 % by weight of the graft copolymer resin (B1) and 10 to 45 % by weight of the copolymer rein (B2). In other exemplary embodiments, the rubber modified aromatic vinyl-based copolymer resin (B) comprises 15 to 50 % by weight of the graft copolymer resin (B1) and 50 to 85 % by weight of the copolymer rein (B2).

### (C) Phosphorus-containing compound in the form of polymer

The phosphorus-containing compound in the form of polymer (C) according to the present invention can impart flame retardancy to the thermoplastic resin composition of the present invention, and has a structure represented by the following Chemical Formula 1. The phosphorus-containing compound in the form of polymer (C) is characterized in that a substituent R defined as follows is directly connected to a phosphorus atom. The substituent R can be helpful in the char formation in flameproof action. 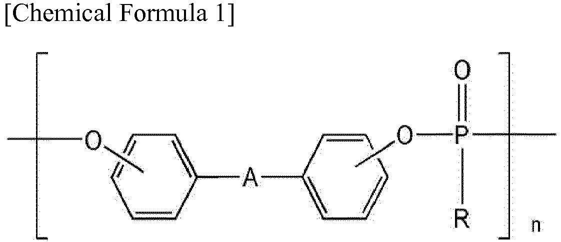 wherein A is single bond, C₁-C₁₀ alkylene, C₁-C₁₀ alkylidene, C₃C₁₂ cycloalkylidene, -S- or -SO₂-, R is C₆-C₂₀ aryl or C₁-C₁₀ alkyl-substituted C₆-C₂₀ aryl, and n is an integer of 4 to 500.

The phosphorus-containing compound in the form of polymer (C) can have a weight average molecular weight (Mw) of 1,000 to 100,000, for example 7,500 to 20,000. When the weight average molecular weight (Mw) of the phosphorus-containing compound in the form of polymer (C) is less than 1,000, mechanical properties can deteriorate. When the weight average molecular weight (Mw) of the phosphorus-containing compound in the form of polymer (C) is more than 100,000, although mechanical properties can improve, the concentration of phosphonic acid at the ends thereof can increase which can decompose the base resin when added to the thermoplastic resin composition. In other words, although the phosphorus-containing flame retardant in the form of a polymer with a high molecular weight may be advantageous because it can improve mechanical properties, it was observed that when the phosphorus-containing flame retardant in the form of a polymer has a high molecular weight, the concentration of phosphonic acid at the ends thereof can increase and thereby can decompose the base resin when added to the thermoplastic resin, which is indicated in the examples.

The thermoplastic resin composition can include the phosphorus-containing compound in the form of polymer (C) in an amount of 0.1 to 40 parts by weight, for example 1 to 30 parts by weight, and as another example 2 to 20 parts by weight, based on 100 parts by weight of the base resin.

When the phosphorus-containing compound in the form of polymer (C) is used in an amount of less than 0.1 parts by weight, sufficient flame retardancy may not be achieved. When the phosphorous-containing compound in the form of a polymer (C) is used in amount of more than 40 parts by weight, properties such as impact strength can deteriorate.

In another specific example of the present invention when the base resin is the polycarbonate, the phosphorus-containing compound in the form of polymer (C) can be used in an amount of 1 to 5 parts by weight.

In another specific example of the present invention when the base resin is a blend of the polycarbonate and the aromatic vinyl-based polymer, the phosphorus-containing compound in the form of polymer (C) can be used in an amount of 10 to 25 parts by weight.

The end groups of the phosphorus-containing compound in the form of polymer (C) can be prepared by reacting with 4-cumylphenol. In exemplary embodiments, the phosphorus-containing compound in the form of polymer (C) can include end groups derived from 4-cumylphenol in an amount of 0.03 to 0.3 mol, for example 0.04 to 0.08 mol, per 1 mol of the repeating units of the Chemical Formula 1.

When the phosphorus-containing compound in the form of polymer (C) includes end groups derived from 4-cumylphenol in an amount of less than 0.03 mol per 1 mol of the repeating units of the Chemical Formula 1, the molecular weight can increase, but the concentration of phosphonic acid at end groups can increase. When the phosphorus-containing compound in the form of polymer (C) includes end groups derived from 4-cumylphenol in an amount of more than 0.3 mol per 1 mol of the repeating units of the Chemical Formula 1, the molecular weight can be significantly decreased and handling of the same can be difficult.

Hereinafter, a method for preparing a phosphorus-containing compound in the form of polymer (C) will be described in detail.

### Method for preparing a phosphorus-containing compound in the form of polymer (C)

The present invention provides a method for preparing a phosphorus-containing flameproof compound in the form of polymer comprising reacting an aryl group-substituted phosphonic acid dichloride with a bisphenol-based compound represented by the following Chemical Formula 2 in the presence of a catalyst such as 4-dimethylaminopyridine to polymerize polyphosphonate with unadjusted end groups, and reacting the polyphosphonate with unadjusted end groups with a reactant such as 4-cumylphenol to adjust the end groups and obtain a phosphorus-containing flameproof compound in the form of polymer represented by the following Chemical Formula 1. Unless otherwise defined herein, the term "aryl" can include C₆-C₂₀ aryl or C₁-C₁₀ alkyl-substituted C₆-C₂₀ aryl. 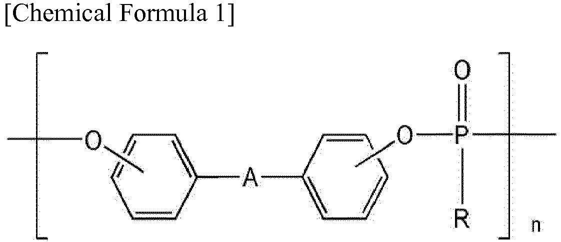 wherein A is single bond, C₁-C₁₀ alkylene, C₁-C₁₀ alkylidene, C₃C₁₂ cycloalkylidene, -S- or -SO₂-, R is C₆-C₂₀ aryl or C₁-C₁₀ alkyl-substituted C₆-C₂₀ aryl, and n is an integer of 4 to 500. 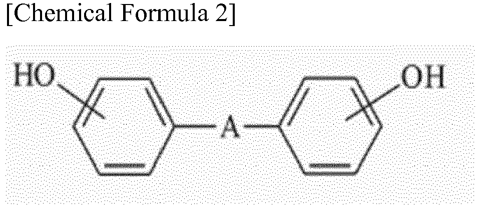 wherein A is single bond, C₁-C₁₀ alkylene, C₁-C₁₀ alkylidene, C₃-C₁₂ cycloalkylidene, -S- or -SO₂-.

Examples of the aryl group-substituted phosphonic acid dichloride are known in the art, are commercially available, and can be selected without undue experimentation by the skilled artisan. In exemplary embodiments, the aryl group-substituted phosphonic acid dichloride can be phenylphosphonic acid dichloride.

Examples of the bisphenol-based compound of Chemical Formula 2 comprise without limitation bis(hydroxyaryl)alkanes such as 1,1-bis(2-hydroxyphenyl)methane, 1,1-bis(4-hydroxyphenyl)ethane, 4,4'-dihydroxy diphenyl, 2,2-bis(4-hydroxyphenyl)propane ('bisphenol A'), 2,4-bis-(4-hydroxyphenyl)-2-methylbutane, 2,2-bis(4-hydroxyphenyl)butane, 2,2-bis(4-hydroxyphenyl)octane, 1,1-bis(4-hydroxyphenyl)propane, 1,1-bis(4-hydroxyphenyl)-n-butane, bis(4-hydroxyphenyl)phenylmethane, 2,2-bis(4-hydroxy-1-methylphenyl)propane, 1,1-bis(4-hydroxy-t-butylphenyl)propane and 2,2-bis(4-hydroxy-3-bromophenyl)propane; bis(hydroxyaryl)cycloalkanes such as 1,1-bis(4-hydroxyphenyl)cyclopentane and 1,1-bis(4-hydroxyphenyl)cyclohexane; 2,2-bis-(3-chloro-4-hydroxyphenyl)-propane, 2,2-bis-(3,5-dichloro-4-hydroxyphenyl)-propane and the like, and combinations thereof. Also, examples of the diphenol compound comprise without limitation hydroquinone and substituted hydroquinones such as 3-methylhydroquinone, 3-ethylhydroquinone, 3-propylhydroquinone, 3-butylhydroquinone, 3-t-butylhydroquinone, 3-phenylhydroquinone, 3-cumylhydroquinone, 2,3,5,6-tetramethylhydroquinone, 2,3,4,5,6-tetra-t-butylhydroquinone, 2,3,5,6-tetrafluorohydroquinone and 2,3,5,6-tetrabromohydroquinone; resorcinol and substituted resorcinols such as 3-methylresorcinol, 3-ethylresorcinol, 3-propylresorcinol, 3-butylresorcinol, 3-t-butylresorcinol, 3-phenylresorcinol, 3-cumylresorcinol, 2,3,4,6-tetrafluororesorcinol and 2,3,4,6-tetrabromoresorcinol; catechol and the like, and combinations thereof. In exemplary embodiments the diphenol of the Chemical Formula 2 can be a bisphenol such as 2,2-bis-(4-hydroxyphenyl)-propane, 2,2-bis-(3,5-dichloro-4-hydroxyphenyl)-propane, 1,1-bis-(4-hydroxyphenyl)-cyclohexane and the like, and combinations thereof, for example 2,2-bis-(4-hydroxyphenyl)-propane called bisphenol-A.

The phosphorus-containing compound in the form of polymer (C) can have lower volatility, lower extractability and excellent mechanical properties, and further can have excellent flame retardancy, compared to existing single-molecular flame retardants. The existing common methods for preparing a polyphosphonate comprise the melt polymerizing method between alkylphosphonic acid diester and bisphenol. However, when using this melt polymerizing method, because removing a used catalyst is difficult, the catalyst can accelerate hydrolysis of the prepared resin and can slowly decompose the resin so that the resin can be discolored. Moreover, when a branching agent is not used, because obtaining high molecular weight can be difficult, mechanical properties of the resin can deteriorate.

The method for preparing a phosphorus-containing compound in the form of polymer (C) of the present invention can use a solution and/or interfacial polymerization method. The methods of the invention can effectively prepare a linear aromatic polyphosphonate from the aryl group-substituted phosphonic acid dichloride.

Also, the method for preparing a phosphorus-containing compound in the form of polymer (C) of the present invention can provide an economical method for preparing a linear aromatic polyphosphonate.

In exemplary embodiments, the present invention provides a method for preparing a phosphorus-containing compound in the form of a polymer using an interfacial polymerization method in which the aryl group-substituted phosphonic acid dichloride reacts with a bisphenol-based compound in the presence of a certain phase-exchanging catalyst. For example, the phosphorus-containing compound in the form of a polymer can be prepared by condensation polymerization of the aryl group-substituted phosphonic acid dichloride and the bisphenol-based compound in the presence of a catalyst 4-dimethylaminopyridine. Increasing the amount used of the catalyst can increase the molecular weight of the phosphorus-containing compound in the form of polymer (C).

In exemplary embodiments of the present invention, 0.03 to 0.3 equivalents of the 4-dimethylaminopyridine can be used based on 1 equivalent of the aryl group-substituted phosphonic acid dichloride. The amount of the phosphorus-containing compound in the form of polymer (C) can increase depending on the amount of the 4-dimethylaminopyridine, but when 4-dimethylaminopyridine is used in an amount of more than 0.1 equivalents, the rate of increase can drop. In exemplary embodiments 4-dimethylaminopyridine can be used in an amount of 0.05 to 0.1 equivalents.

The molecular weight and properties of the end groups can be adjusted by reacting the end groups with 4-cumylphenol.

Hydrochloric acid generated during the polymerization reaction by the method for preparing a phosphorus-containing compound in the form of polymer (C) of the present invention can be removed by using amine to prepare a salt. A non-limiting example of an amine that can be used to remove hydrochloric acid generated during the polymerization reaction is triethylamine.

In exemplary embodiments, 1 equivalent of the aryl group-substituted phosphonic acid dichloride is reacted with 1 equivalent of the bisphenol-based compound represented by the Chemical Formula 2.

The present inventors have investigated the correlation between molecular weight and acid distribution at end groups based on the amount of 4-cumylphenol used for adjusting end groups after polymerization of the phosphorus-containing compound in the form of polymer (C). As a result, the molecular weight of the phosphorus-containing compound in the form of polymer (C) can be changed according to the amount and time of addition of 4-cumylphenol. In exemplary embodiments, 4-cumylphenol can be added at the initial stage of preparing the phosphorus-containing compound in the form of polymer. The weight average molecular weight (Mw) of the phosphorus-containing compound prepared by such a method can be 1,000 to 100,000, for example 7,500 to 20,000.

In exemplary embodiments, the polyphosphonate with unadjusted end groups can be reacted with a reactant such as 4-cumylphenol to adjust the end groups and obtain a phosphorus-containing flameproof compound in the form of polymer represented by the following Chemical Formula 1. The 4-cumylphenol can be used in an amount of 0.03 to 0.3 equivalents, for example 0.04 to 0.08 equivalents, based on 1 equivalent of the aryl group-substituted phosphonic acid dichloride.

The molecular weight tends to be inversely proportional to an added amount of 4-cumylphenol, but when an amount of 4-cumylphenol is very small a concentration of phosphonic acid at end groups can increase. Therefore, when the 4-cumylphenol is used in an amount within the above range of equivalents, the phosphorus-containing compound in the form of polymer (C) with a reasonable molecular weight and a minimum concentration of phosphonic acid can be obtained.

The concentration of phosphonic acid present at end groups of the phosphorus-containing compound in the form of polymer (C) can be represented as a quantitative value by dissolving the phosphorus-containing compound in the form of polymer (C) in dimethyl sulfoxide (DMSO), titrating by means of IN NaOH solution, and measuring acid value. The acid value measured according to such polymerization conditions can be 0.01 to 12, for example 0.01 to 10. When the acid value of the phosphorus-containing compound in the form of polymer (C) measured by the above measuring method is 12 or more, the main chain of polycarbonate can be decomposed at a later processing process such as extruding or injecting, which can deteriorate mechanical properties such as impact strength.

The reaction temperature of the aryl group-substituted phosphonic acid dichloride and the bisphenol-based compound can be, for example, -40 to 40 °C, for example -10 to 5 °C. The polymerization reaction can proceed under a nitrogen atmosphere. The reaction time can be 2 to 24 hours, for example 3 to 5 hours. Examples of suitable reaction solvents can include without limitation methylene chloride, 1,2-dichloroethane, dichlorobenzene and the like, and combinations thereof.

The polyphosphonate prepared by the above method can be obtained after washing, solidification and drying steps. The polyphosphonate can be acid-washed by means of hydrochloric acid solution, washed by means of distilled water, and solidified under a solution of hexane. The solidified polyphosphonate can be dried in a vacuum oven to obtain the phosphorus-containing compound in the form of polymer (C) represented by the Chemical Formula 1 in high yield.

In other exemplary embodiments of the present invention the phosphorus-containing compound in the form of a polymer can be prepared by an interfacial polymerization method in which the aryl group-substituted phosphonic acid dichloride reacts with the bisphenol-based compound under (in the presence of) a phase-exchanging catalyst. Examples of the phase-exchanging catalyst include without limitation tetrabutylammonium iodide, tetrabutylammonium bromide, benzyltriphenylphosphonium chloride, and the like, and combinations thereof. In exemplary embodiments, the phase-exchange catalyst can be benzyltriphenylphosphonium.

Hydrochloric acid generated by the polymerization reaction of the method for preparing the phosphorus-containing compound in the form of polymer (C) can be neutralized by using an alkaline solution. Examples of the alkaline solution can include without limitation sodium hydroxide solution, potassium hydroxide solution and the like.

In exemplary embodiment, the phosphorus-containing compound in the form of polymer can be prepared by using 1 equivalent of the bisphenol-based compound based on 1 equivalent of the aryl group-substituted phosphonic acid dichloride.

In exemplary embodiments, the polyphosphonate with unadjusted end groups can be reacted with a reactant such as 4-cumylphenol to adjust the end groups and obtain a phosphorus-containing flameproof compound in the form of polymer represented by the following Chemical Formula 1. 4-cumylphenol can be used in an amount of 0.03 to 0.3 equivalents, for example 0.04 to 0.08 equivalents, based on 1 equivalent of the aryl group-substituted phosphonic acid dichloride.

In exemplary embodiments, the phase-exchanging catalyst such as benzyltriphenylphosphonium chloride can be used in an amount of 0.03 to 0.3 equivalents, for example 0.01 to 0.05 equivalents, based on 1 equivalent of the aryl group-substituted phosphonic acid dichloride.

The reaction temperature of the aryl group-substituted phosphonic acid dichloride and the bisphenol-based compound can be, for example, -40 to 40 °C, for example -10 to 5 °C. Also, the reaction can proceed under a nitrogen atmosphere. The reaction time can be 2 to 24 hours, for example 3 to 5 hours. Examples of reaction solvents can comprise without limitation methylene chloride, 1,2-dichloroethane, dichlorobenzene and the like, and combination thereof. In exemplary embodiments, the reaction solvent can include at least one of the foregoing solvents and water.

The polyphosphonate prepared by the above method can be obtained after washing, solidification and drying steps. The polyphosphonate can be acid-washed by means of hydrochloric acid solution, washed by means of distilled water, and solidified under a solution of hexane. The solidified polyphosphonate can be dried in a vacuum oven to obtain the phosphorus-containing compound in the form of polymer (C) represented by the Chemical Formula 1 in high yield.

The thermoplastic resin composition which can have excellent flame retardancy of the present invention can comprise one or more additives, depending on the end use of the composition. Examples of the additives include without limitation flame retardant aids, lubricants, plasticizers, heat stabilizers, anti-dropping agents, antioxidants, compatibilizers, light-stabilizers, pigments, dyes, inorganic additives, and the like, and combinations thereof. Examples of the inorganic additives comprise without limitation asbestos, glass fiber, talc, ceramic, sulphate and the like, and combinations thereof. The additive can be used in amount of 30 parts by weight or less based on 100 parts by weight of the base resin.

The thermoplastic resin composition which can have excellent flame retardancy of the present invention can have a narrow molecular weight distribution. In exemplary embodiments, the thermoplastic resin composition can have a PDI (Poly Dispersity Index) measured by using conventional methods for measuring molecular weight of 1.8 to 2.5.

The thermoplastic resin composition which can have excellent flame retardancy of the present invention can be prepared by conventional methods known in the art for preparing resin compositions. For example, the thermoplastic resin composition in the form of pellets or chips can be prepared by mixing the components discussed herein and optionally other additives and melt-extruding the mixture in an extruder.

The present invention also provides a plastic molded article which can have excellent flame retardancy molded from the thermoplastic resin composition.

Because the thermoplastic resin composition of the present invention can have excellent heat resistance, as well as excellent flame retardancy, the thermoplastic resin composition can be widely used in a variety of applications, for example, housings for electric/electronic products such as TVs, audio equipment, cellular phones, digital cameras, navigation devices, washing machines, computers, monitors, MP3 players, video players, CD players, dishwashers and the like, office automation equipment, and other large products such as injection molded or extrusion molded products.

Methods for molding the thermoplastic resin composition according to the present invention to make a plastic molded article are not especially limited, and can include, for example, extrusion molding, injection molding, casting and the like. The molding methods can be easily carried out by a person of ordinary skill in the art to which the present invention pertains.

The invention can be better understood by reference to the following examples which are intended for the purpose of illustration and are not to be construed as in any way limiting the scope of the present invention, which is defined in the claims appended hereto.

### Examples

Preparation Example 1: preparation of phosphorus-containing compound in the form of polymer (C) by solution polymerization

2,2-bis-(4-hydroxyphenyl)-propane (100 g, 0.438 mol) is dissolved in methylene chloride (300 mL) and triethylamine (152.6 mL) under a nitrogen atmosphere at room temperature. In the mixed solution 4-dimethylaminopyridine (5.35 g, 0.043 mol) and 4-cumylphenol (8.0 g, 0.037 mol) are added, dissolved and the resultant solution is cooled to 0 °C. To the mixed solution a mixed solution of phenylphosphonic acid dichloride (85.4 g, 0.438 mol) and methylene chloride (30 mL) is dropped under the nitrogen atmosphere at 0 °C for 1 hour, the resultant solution is heated to room temperature, and is stirred for 5 hours. The resultant solution is diluted by adding 2 L of methylene chloride, is washed by using 2 L of 1 N hydrochloric acid solution, and this process is repeated once more. The resultant solution is washed by using 2 L of distilled water, this process is repeated two times, the layer of methylene chloride is collected, it is concentrated under vacuum, and it is precipitated in hexane to obtain a phosphorus-containing compound in the form of polymer (C) with a shape of white solid in a yield of 92%.

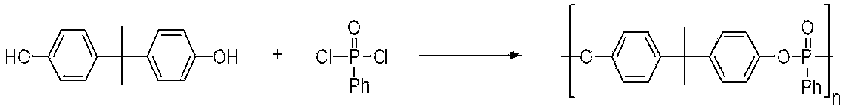

### Preparation Examples 2 to 3 and Preparation Comparative Examples 1 to 3

Preparation Examples 2 to 3 and Preparation Comparative Examples 1 to 3 are carried out by the same manner as Preparation Example 1 except for the amount of 4-cumylphenol and 4-dimethylaminopyridine (DMAP) added and reaction times. The results are shown in Table 1.

**[Table 1]**

| | Preparation Examples | | | | | |
|---|---|---|---|---|---|---|
| | Example 1 | Example 2 | Example 3 | Comparative Example 1 | Comparative Example 2 | Comparative Example 3 |
| DMAP (mol%) | 10 | 10 | 10 | 3 | 6 | 10 |
| 4-cumylphenol (mol%) / adding time | 8(0h) | 4(0h) | 2(0h) | 8(5h) | 8(5h) | 8(5h) |
| Molecular Weight (Mw) | 11700 | 15900 | 23200 | 12800 | 20600 | 88000 |
| Poly Dispersity Index (PDI) | 2.0 | 2.2 | 1.9 | 2.5 | 2.1 | 2.8 |
| Acid Value | 5.1 | 7.8 | 9.5 | 13.8 | 13.2 | 12.5 |
| Average Repeating Units (n) | 33.4 | 45.4 | 66.3 | 36.6 | 58.9 | 251.4 |

From the results in Table 1, it can be seen that molecular weight depends on the amount of 4-cumylphenol added, which is an end-group adjusting agent. The polyphosphonate with high molecular weight is advantageous because it can have better mechanical properties, but when a polyphosphonate with a high molecular weight is prepared by the above method, the concentration of phosphonic acid at the end thereof can increase, which can result in decomposition of the base resin when the polyphosphonate is added to the thermoplastic resin and it can degrade flame retardancy.

### Examples 1 to 3 and Comparative Examples 1 to 3

Specifications of each component used in the following examples and comparative examples are as follows.

### (A) Polycarbonate resin

A bisphenol-A type polycarbonate with a weight average molecular weight of 25,000 g/mol, which is commercially available under the trade name PANLITE L-1250W from Teijin Company of Japan, is used.

### (C) Phosphorus-containing compound in the form of a polymer

The phosphorus-containing compounds in the form of a polymer prepared according to Preparation Examples 1 to 3 and Preparation Comparative Examples 1 to 3 are used.

100 parts by weight of the polycarbonate and 3 parts by weight of the phosphorus-containing compound in the form of a polymer are extruded by means of a conventional twin screw extruder to prepare an extruded product in the form of pellets, the pellets are dried at 80 °C for 2 hours, and the pellets are molded into test specimens by means of a 10 oz injection molding machine at an injection temperature of 180 to 280 °C and a mold temperature of 40 to 80 °C.

### Methods for evaluating properties

(1) Flame retardancy: flame retardancy is measured for the test specimen with a thickness of 1/8" in accordance with UL 94 VB flameproof regulation.
(2) Total burning time: a total burning time is measured in accordance with UL-94.
(3) Molecular weight: a molecular weight of the extruded test specimen is measured by means of GPC.
(4) Distribution of molecular weight (PDI): a number average molecular weight (Mn) and a weight average molecular weight (Mw) are measured by means of GPC, and then PDI (Mw/Mn) is calculated.
(5) Izod impact strength (kgfcm/cm, 1/8"): izod impact strength is measured in accordance with ASTM D256.

**[Table 2]**

| Phosphorus-containing compound in the form of polymer used | Preparation example 1 | Preparation example 2 | Preparation example 3 | Preparation comparative example 1 | Preparation comparative example 2 | Preparation comparative example 3 |
|---|---|---|---|---|---|---|
| Molecular weight of thermoplastic resin composition (Mw) | 24500 | 23900 | 23700 | 15800 | 16800 | 19800 |
| Distribution of molecular weight of thermoplastic resin composition (PDI) | 2.1 | 2.4 | 2.4 | 6.3 | 6.2 | 6.0 |
| UL94 flameproof degree (1/8") | V-0 | V-0 | V-0 | V-2 (drip) | V-2 (drip) | V-2 (drip) |
| Total burning time (s) | 1 | 2 | 5 | 68 | 74 | 79 |
| IZOD (room temperature) | 66 | 63 | 60 | 51 | 50 | 53 |

Depending on the acid value of the phosphorus-containing flame retardant in the form of a polymer, the higher the acid value, the chain decomposition of the base resin increases, which can decrease molecular weight and impact strength, and which can also degrade flame retardancy.

### Examples 4 to 7 and Comparative Examples 4 to 7

Specifications of each component used in the following examples and comparative examples are as follows.

### (A) Polycarbonate resin

A bisphenol-A type polycarbonate with a weight average molecular weight of 25,000 g/mol, which is commercially available under the trade name PANLITE L-1250W from Teijin Company in Japan, is used.

### (B) Rubber modified aromatic vinyl-based polymer

CHT, which is a rubber reinforced styrene-based resin commercially available from Cheil Industries Co., Ltd., is used.

### (C) Phosphorus-containing compound in the form of polymer

The phosphorus-containing compound in the form of a polymer prepared in accordance with Preparation Example 1 is used.

### (C') Aromatic phosphoric acid ester compound

CR-741 S (product name) commercially available from Daihachi Company in Japan is used.

The components in the amounts set forth in Table 3 below are extruded by means of a conventional twin screw extruder to prepare an extruded product in the form of pellets, the pellets are dried at 80 °C for 2 hours, and the pellets are molded into test specimens by means of a 10 oz injection molding machine at an injection temperature of 180 to 280 °C and a mold temperature of 40 to 80 °C.

### Methods for evaluating properties

(1) Flame retardancy: flame retardancy is measured for the test specimen with a thickness of 1/8" in accordance with UL 94 VB flameproof regulation.
(2) Total burning time: a total burning time is measured in accordance with UL-94.
(3) Izod impact strength (kgfcm/cm, 1/8"): izod impact strength is measured in accordance with ASTM D256.

**[Table 3]**

| | Examples | | | | Comparative examples | | | |
|---|---|---|---|---|---|---|---|---|
| | 4 | 5 | 6 | 7 | 4 | 5 | 6 | 7 |
| (A) Polycarbonate resin | 100 | 100 | 70 | 70 | 100 | 100 | 70 | 70 |
| (B) Rubber modified aromatic vinyl-based resin | - | - | 30 | 30 | - | - | 30 | 30 |
| (C) Polyphosphonate | 2 | 3 | 13 | 18 | - | - | - | - |
| (C') Aromatic phosphoric acid ester compound | - | - | - | - | 2 | 3 | 13 | 18 |
| Flameproof degree (UL94, 1/8") | V-0 | V-0 | V-0 | V-0 | V-1 | V-0 | V-1 | V-1 |
| Total burning time (s) | 9 | 1 | 18 | 11 | 74 | 41 | 109 | 89 |
| IZOD (room temperature) | 70 | 67 | 19 | 14 | 74 | 71 | 20 | 15 |

When the aromatic phosphoric acid ester compound (C') of the comparative examples is used instead of the phosphorus-containing compound in the form of a polymer (C), which is a flame retardant of the present invention, flame retardancy degrades to V-1 (comparative examples 1, 4), or the burning time significantly degrades.

Many modifications and other embodiments of the invention will come to mind to one skilled in the art to which this invention pertains having the benefit of the teachings presented in the foregoing descriptions. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation, the scope of the invention being defined in the claims.

## Claims

1. A thermoplastic resin composition that can have excellent flame retardancy comprising:
100 parts by weight of a base resin including 30 to 100 % by weight of a polycarbonate-based resin (A); and
0.1 to 40 parts by weight of a phosphorus-containing compound in the form of polymer (C) represented by the following Chemical Formula 1: 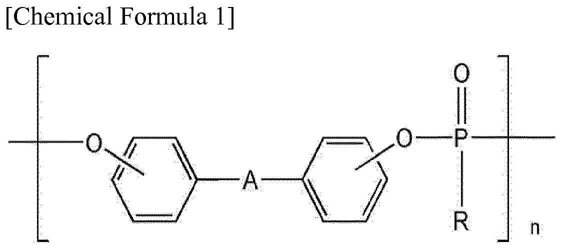 wherein A is a single bond, C₁-C₁₀ alkylene, C₁-C₁₀ alkylidene, C₃-C₁₂ cycloalkylidene, -S- or -SO₂-, R is C₆-C₂₀ aryl or C₁-C₁₀ alkyl-substituted C₆-C₂₀ aryl, and n is an integer of 4 to 500.

2. The thermoplastic resin composition of claim 1, wherein the base resin comprises 30 to 00 % by weight of the polycarbonate-based resin (A) and 0 to 70 % by weight of a rubber modified aromatic vinyl-based polymer (B).

3. The thermoplastic resin composition of claims 1 or 2, wherein the rubber modified aromatic vinyl-based copolymer (B) comprises 10 to 100 % by weight of a graft copolymer resin (B1) and 0 to 90 % by weight of a copolymer rein (B2).

4. The thermoplastic resin composition of claim 3, wherein the graft copolymer resin (B1) is a copolymer in which 5 to 65 % by weight of a rubbery polymer, 34 to 94 % by weight of an aromatic vinyl-based monomer and 1 to 30 % by weight of a monomer copolymerizable with the aromatic vinyl-based monomer are graft-polymerized, and the copolymer resin (B2) is a copolymer of 60 to 90 % by weight of an aromatic vinyl-based monomer and 10 to 40 % by weight of a monomer copolymerizable with the aromatic vinyl-based monomer.

5. The thermoplastic resin composition of any one of claims 1 to 4, wherein R is phenyl.

6. The thermoplastic resin composition of any one of claims 1 to 5, wherein the phosphorus-containing compound in the form of polymer (C) has a weight average molecular weight (Mw) of 1,000 to 100,000.

7. The thermoplastic resin composition of any one of claims 1 to 6, wherein end groups of the phosphorus-containing compound in the form of polymer (C) are prepared by reacting with 4-cumylphenol.

8. The thermoplastic resin composition of claim 7, wherein the phosphorus-containing compound in the form of polymer (C) includes the end groups derived from 4-cumylphenol in an amount of 0.03 to 0.3 mol per 1 mol of the repeating units of the Chemical Formula 1.

9. The thermoplastic resin composition of any one of claims 1 to 8, wherein the thermoplastic resin composition has a Poly Dispersity Index (PDI) of 1.8 to 2.5.

10. The thermoplastic resin composition of any one of claims 1 to 9, wherein the phosphorus-containing compound in the form of polymer (C) has an acid value of 0.01 to 12.

11. The thermoplastic resin composition of any one of claims 1 to 10, further comprising one or more additives comprising a flame retardant, flame retardant aid, lubricant, plasticizer, heat stabilizer, anti-dropping agent, antioxidant, compatibilizer, light-stabilizer, pigments, dye, inorganic additive, and combinations thereof.

12. A plastic molded article molded from the thermoplastic resin composition of any one of claims 1 to 11.

13. A method for preparing a phosphorus-containing flame retardant compound in the form of a polymer comprising:
reacting aryl group-substituted phosphonic acid dichloride with bisphenol-based compound represented by the following Chemical Formula 2 in the presence of a catalyst 4-dimethylaminopyridine to polymerize polyphosphonate with unadjusted end groups; and
reacting the polyphosphonate with unadjusted end groups with 4-cumylphenol to adjust the end groups and obtain a phosphorus-containing flame retardant compound in the form of a polymer represented by the following Chemical Formula 1: 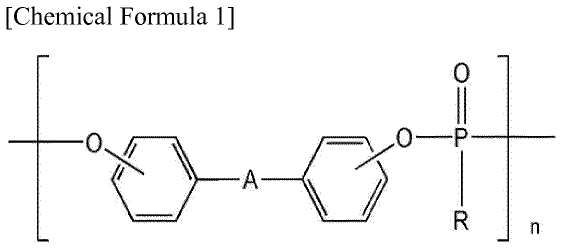 wherein A is a single bond, C₁-C₁₀ alkylene, C₁-C₁₀ alkylidene, C₃-C₁₂ cycloalkylidene, -S- or -SO₂-, R is C₆-C₂₀ aryl or C₁-C₁₀ alkyl-substituted C₆-C₂₀ aryl, and n is an integer of 4 to 500; 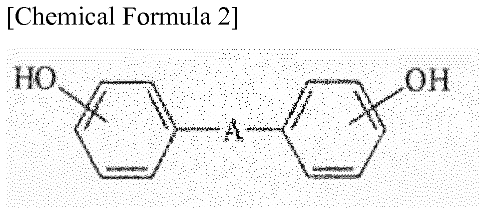 wherein A is a single bond, C₁-C₁₀ alkylene, C₁-C₁₀ alkylidene, C₃-C₁₂ cycloalkylidene, -S- or -SO₂-.

14. The method for preparing a phosphorus-containing flame retardant compound in the form of a polymer of claim 13, comprising reacting 1 equivalent of the aryl group-substituted phosphonic acid dichloride with 1 equivalent of the bisphenol-based compound represented by Chemical Formula 2.

15. The method for preparing a phosphorus-containing flame retardant compound in the form of a polymer of claims 13 or 14, comprising reacting 1 equivalent of the aryl group-substituted phosphonic acid dichloride with 0.03 to 0.3 equivalents of 4-cumylphenol.
